(19) Europäisches Patentamt
European Patent Office
Office européen des brevets

(11) **EP 2 561 326 B1**

(12) **EUROPEAN PATENT SPECIFICATION**

(45) Date of publication and mention
of the grant of the patent:
**23.11.2016 Bulletin 2016/47**

(51) Int Cl.:
***G01K 11/00*** (2006.01)   ***G01J 5/30*** (2006.01)
***G01J 1/04*** (2006.01)   ***G01J 5/08*** (2006.01)

(21) Application number: **11768333.4**

(22) Date of filing: **15.01.2011**

(86) International application number:
**PCT/CA2011/000438**

(87) International publication number:
**WO 2011/127593 (20.10.2011 Gazette 2011/42)**

(54) **PHOTOLUMINESCENT TEMPERATURE SENSOR UTILIZING A SINGULAR ELEMENT FOR EXCITATION AND PHOTODETECTION**

PHOTOLUMINESZENTER TEMPERATURSENSOR UNTER VERWENDUNG EINES EINZELNEN ELEMENTS ZUR ANREGUNG UND PHOTODETEKTION

CAPTEUR DE TEMPÉRATURE PHOTO-LUMINESCENT UTILISANT UN SEUL ÉLÉMENT POUR L'EXCITATION ET LA PHOTO-DÉTECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2010 US 325299 P**

(43) Date of publication of application:
**27.02.2013 Bulletin 2013/09**

(73) Proprietor: **Powell Canada Inc.**
**British Columbia V7M 3N2 (CA)**

(72) Inventor: **BELAK, Roy**
**North Vancouver,**
**British Columbia**
**V7M 3N2 (CA)**

(74) Representative: **Wilson Gunn**
**Charles House**
**148/9 Great Charles Street**
**Birmingham B3 3HT (GB)**

(56) References cited:
**WO-A1-2008/152922    US-A- 4 652 143
US-A- 5 470 155    US-B2- 7 329 998**

**Description**

**Field of the Invention**

The present invention relates to optical temperature measuring techniques, and, more specifically, to devices and methods for optical measurement of temperature in an environment.

**Background**

Optical temperature measuring techniques are well known in the art. There are several optical phenomena which can be exploited to enable temperature measurement by a sensor, analogous to the way in which thermocouples exploit the thermoelectric effect. These optical methods include white light interferometry, photonic band-gap measurement, and photoluminescent decay. Each method has advantages and disadvantages which limits their general application.

Photoluminescent decay methods comprise the use of a material with photoluminescent properties which are temperature dependent. Typically in the form of a sensor at the end of a fiber optic cable, the photoluminescent material is excited to luminescence by sending excitation radiation of one wavelength to the sensor, and the resulting light emitted through photoluminescence (the photoluminescent light) at a different wavelength is photo-detected. The detected signal is then processed to determine the temperature of the photoluminescent material in the sensor.

After an excitation incident light pulse, the flux of photoluminescent photons emanating from the photoluminescent material decreases as function of time, typically but not exclusively by an exponential relationship. The nature of the exponential relationship differs at various temperatures and thus permits temperature determination.

Photoluminescent temperature measurement techniques are particularly suitable for applications in environments having strong electric and/or magnetic fields and the like, where metal sensors cannot be relied upon to provide accurate results because the metal is heated when immersed in the electromagnetic field, causing a bias in the readings. In addition, sensors utilizing metal components and conductors often provide an unsafe path for dielectric breakdown in environments where high voltages are present.

Basic concepts of photoluminescent-based temperature sensing, as well as many different forms of sensors, are described in U.S. Pat. No. 4,448,547. The measurement of the decay time of the luminescence after termination of an excitation pulse, as a measurement of temperature, is described in U.S. Pat. No. 4,652,143. The reader is also referenced to US5470155, US7329998 and WO2008/152922. However, in the prior art, as far as is known to the inventor, the source of incident light and the photodetector for photoluminescent light are separate optical devices.

Summary Of The Invention

The present invention relates to a system according to claim 1 and method according to claim 7 for measuring the temperature in an environment, using the temperature-dependent properties of photoluminescent light emitted by a photoluminescent material having been excited by incident light. In general terms, a single semi-conductor optical device may be used to excite a photoluminescent material with incident light, and then detect the returning photoluminescent light in order to determine the temperature of an object in contact with the photoluminescent material, or the environment in which the photoluminescent material is situated in. The incident and photoluminescent light may be transmitted to and from the photoluminescent material via a single or a plurality of light conduits. In one embodiment, these light conduits may comprise optical fibers or bundles of optical fibers.

**Brief Description Of The Drawings**

In the drawings, like elements are assigned like reference numerals. The drawings are not necessarily to scale, with the emphasis instead placed upon the principles of the present invention. Additionally, each of the embodiments depicted are but one of a number of possible arrangements utilizing the fundamental concepts of the present invention. The drawings are briefly described as follows:

Fig.1 is a graphical example of temperature dependant photon flux of a photoluminescent material following excitation with incident light.

Fig. 2A shows a schematic diagram of one embodiment of the present invention. Fig. 2B shows a schematic diagram of one embodiment of the circuitry for driving the optical device.

Fig. 3 shows one embodiment of an optical device, optically connected to a photoluminescent material.

Fig. 4A shows one view of an LED as an exemplary semi-conductor optical device.

Figure 4B shows a front view of the same device. Fig. 4C and 4D show views of an alternative embodiment of an LED.

Fig. 5 shows emission and excitation curves for an exemplary photoluminescent material.

Fig. 6 shows a graphical representation of charge pulse followed by photon flux decay.

Fig. 7 shows the nature of background signals inherent in one embodiment

Fig. 8 shows a graphical representation of photon flux decay resulting from a low amplitude charge pulse and a high amplitude charge pulse, with resulting differing photon flux decay.

**Detailed Description Of Preferred Embodiments**

The invention relates to a system and method of temperature measurement using optical methods and a photoluminescent material. When describing the present invention, all terms not defined herein have their common art-recognized meanings. To the extent that the following description is of a specific embodiment or a particular use of the invention, it is intended to be illustrative only, and not limiting of the claimed invention.

As used herein, the term "photoluminescent material" means any material which emits light of a certain wavelength upon being excited by incident light. The term "semi-conductor optical device" means a component comprising a semiconductor material which possesses the properties of electroluminescence to produce the incident light which excites the photoluminescent material, and photosensitivity to the photoluminescent light produced by the excited photoluminescent material.

In a typical prior art device, separate photo-emitter and photo-detector devices are used in conjunction with one another to determine the temperature dependant properties of a photoluminescent material, and therefore the temperature at which the photoluminescent material is currently held. Photons of a particular wavelength are generated by a light source, which is typically a light emitting diode (LED), laser, or other narrow-band source. These photons are used to illuminate a photoluminescent material, which photoluminesces after excitation from the incident photons. In a standard application, the incident photons and photoluminesced photons will have different prominent wavelengths, but this need not always be the case. At least a portion of the photoluminesced photons then become incident on a photo-detecting element. Conventionally, wavelength selective filters are used to ensure that the photo-detector only senses the photoluminesced photons. In addition, light-guiding fibers and focusing optics are often used to increase the flux of photons both used for excitation of the photoluminescent material and detection of the photoluminesced photons.

In embodiments of the present invention, the system comprises a single semi-conductor optical device (12) which comprises one active component, such as an LED. This single optical device combines the functions of photo-emitting and photo-detecting, such that the active region which emits light is the same active region which detects light. A photoluminescent material (14) is optically connected to the optical device (12) with a light coupling conduit, such as an optical fiber (20) or fibers. The optical device (12) emits light which is directed to the photoluminescent material (14), receives photoluminesced light from the photoluminescent material (14), and generates signal information derived from the photoluminesced light. The optical device (12) is connected to a driving/receiving circuit (15), which in turn is connected to a processor (16) having functional components for driving the optical device, and for processing the signal information to derive temperature information.

The driving/receiving circuit (15) comprises a driving circuit (15A) for actuating the photo-emission configuration of the optical device, and a receiving circuit (15B) for the output resulting from photo-detection by the optical device. The circuit (15) further comprises a switch (15C) is operated by the processor (16) to flip back and forth between photo-emission and photo-detection modes.

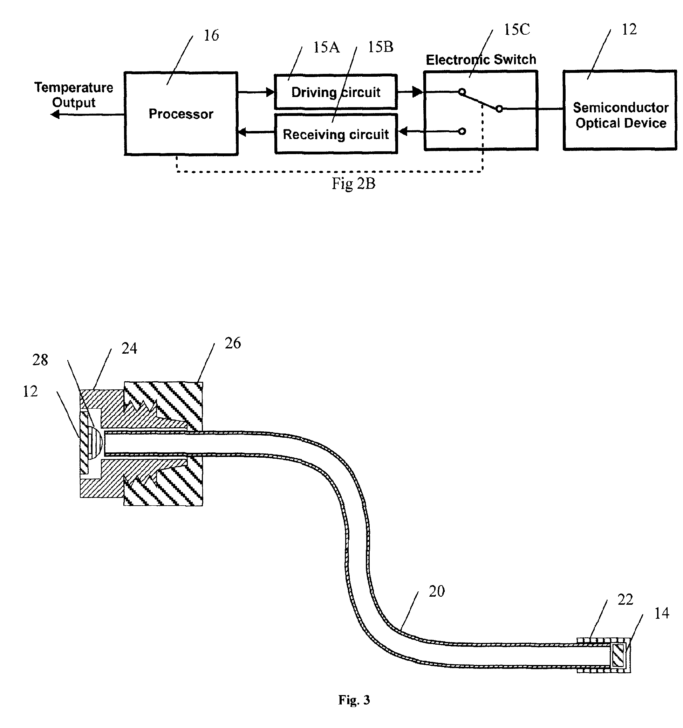

As shown in Figure 3, in one embodiment, the optical device may comprise an LED (12), examples of which are well known in the art, and need not be further described herein. The active region or silicon junction of an LED allows both photon emission (electroluminescence) and photon detection. In one embodiment, a structural cap (22) holds the photoluminescent material (14) adjacent to the exposed end of the optical fiber (20). The cap (22) may be a discrete item, or an extruded portion of the fiber jacketing, or any methodology that is capable of holding the photoluminescent material adjacent to the end of the optical fiber (20). The other end of the optical fiber (20) is held adjacent to the LED (12) by a mounting block (24) and connector (26). The combined action of the mounting block (24) and connector (26) positions the optical fiber (20) and the LED (12) such that photons can efficiently be coupled from the LED (12) to the fiber (20) and vice-versa. In one embodiment, the LED is positioned behind a lens (28) to improve optical coupling between LED and fiber, but this is optional. The structure by which the LED (12), optical fiber (20) and photoluminescent material (14) are positioned relative to each other is not essential to the claimed invention, unless specifically recited to be limiting.

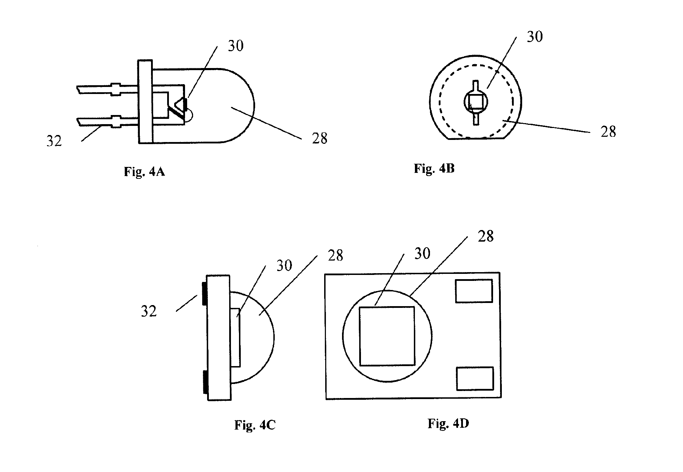

An exemplary installation of an LED is shown in Figures 4A and 4B. The LED comprises a substrate onto which the circuitry (not shown) and LED die (30) are mounted. The LED die (30) performs the function of the active region or silicon junction described above. In addition, a lens (28) may be mounted over the die (30) to control the directionality of incident photons. Electrical contacts (32) are accessible for providing the currents and voltages needed to utilize the LED as a single optical device. An alternative installation of an LED is shown in Figures 4C and 4D.

As is well known in the art, the photoluminescent material, frequently referred to as a "phosphor", may be comprised of a host material enhanced with an active material which provides the desired photoluminescent properties, allowing a large assortment of possible options. Some common photoluminescent materials include, without limitation, Ruby ($Al_2O_3:Cr^{3+}$) as described in US Patent 4,776,827, variations of magnesium germanate ($Mg_{28}Ge_{10}O_{48}$) activated with tetravalent manganese ($Mn^{4+}$) (US Patent 4,652,143) and $Mg_4FGeO_6$ also activated with tetravalent manganese ($Mn^{4+}$) (McElhaney et al., 1992). Many phosphors exist, each with properties that may be better suited for particular applications. Fluorescent lamps and display devices often incorporate phosphors to allow the generation of colored light from light of different spectral distribution.

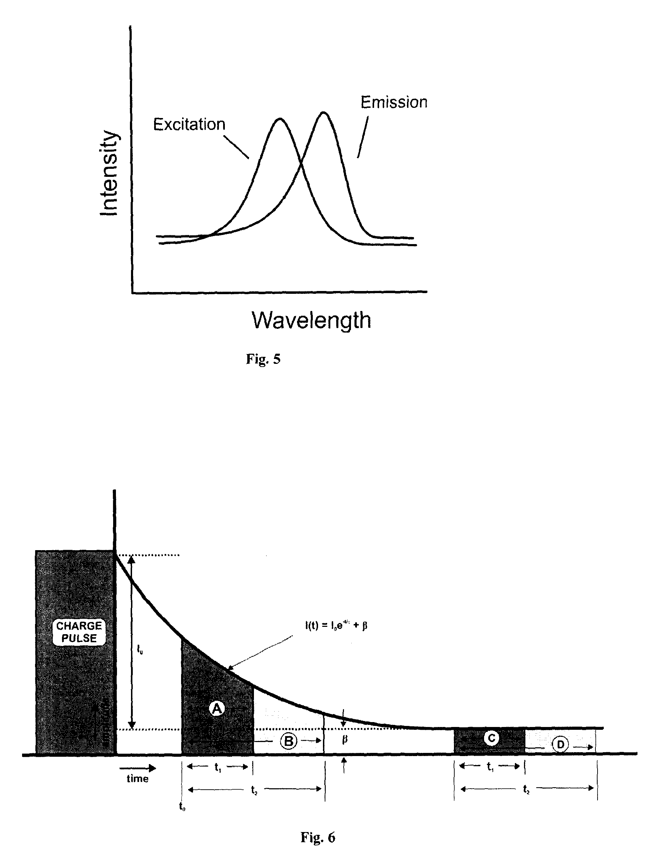

In the prior art, where there is segregation in the excitation and detected emission curves, the photo-emitter may be tuned to the excitation wavelength while the photo-detector may be optimized to detect the photoluminescent wavelength. In embodiments of the present invention, because a single optical device is used for both emission and detection, the excitation and detection wavelengths must overlap to some extent. Furthermore, the emission band of the LED should fall ideally within this overlap region as the LED is typically sensitive in the same wavelength band where it emits. This overlap of emission and excitation wavelengths of the photoluminescent material and the emission spectrum of LED allows a single LED to both excite and detect photons from the photoluminescent material. Figure 5 shows an exemplary emission and excitation curve for a phosphor with such an overlap. The amount of overlap between these wavelength bands need not be strictly quantified, but must be significant enough to allow the LED to detect the emissions from the photoluminescent material.

In one embodiment, the photoluminescent emission spectrum will have a Full Width at Half Maximum bandwidth (FWHM) of between about 10 to about 30 nm.

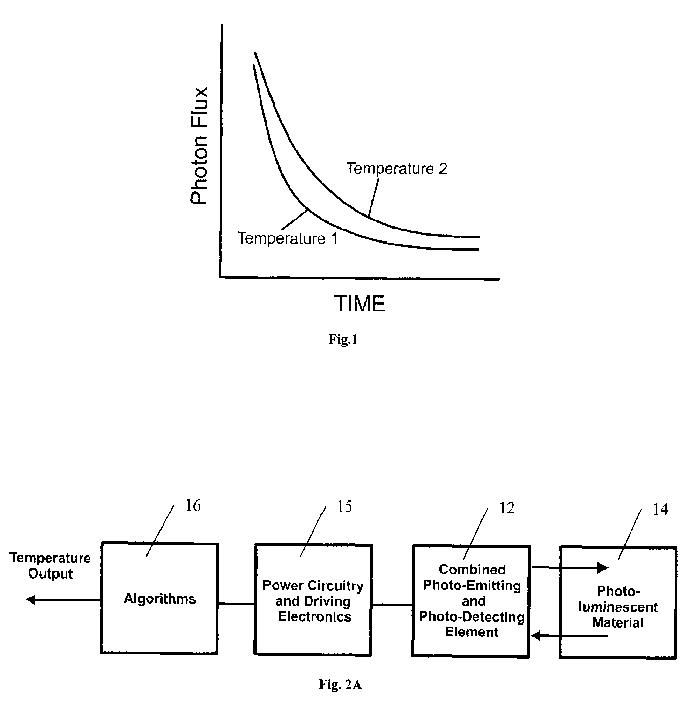

The LED, when driven by appropriate currents or voltages, is capable of emitting photons of narrow spectral bandwidth, and as a photodetector is also capable of outputting signal information, which may comprise either a current or voltage that is proportional to the flux of photoluminescent light. In one embodiment, the processor (16) processes the signal information received through the receiving circuit (15B). This signal information comprises data related to time decay of the photoluminescent photon flux. As shown in Figure 1, the relationship between photon flux and time is temperature-dependent. This temperature dependency means that for any given temperature of the photoluminescent material, within reasonable operating parameters, a unique time decay curve exists. Therefore, where the signal information comprises a time decay curve, a corresponding temperature may be determined by a suitable algorithm.

A standard photon flux decay of a photoluminescent source is shown in Figure 6, which schematically represents one embodiment of a method of measuring photon flux decay to a background or offset level. Various integration algorithms are known which allow for decay time calculation from a plurality of integrals of signal with known integration windows, and with the offsets ($\beta$) subtracted. The offset signal measurement is taken at some point after more than 3 x $\tau$ has elapsed, where $\tau$ is defined as the time constant for the photon flux to decay to 1/e (~63.2%) of its asymptotic or final level. In this scenario, the background signal is assumed to be comprised of only a static offset signal which is a DC level having no time dependency during the measurement period. The value representative of the time decay of the photoluminescent light may comprise $\tau$ or any other value quantifying the photon flux decay. This value may be correlated with temperature in a look-up table, or by an algebraic relationship. The temperature value may then be outputted in conventional fashion.

In one embodiment, the value of $\tau$ can be derived by solving the equation (Sholes and Small);

$$\frac{A-C}{B-D} = \frac{1-e^{\frac{-t_1}{\tau}}}{1-e^{\frac{-t_2}{\tau}}}$$

With the following simplification

$$t_1 = \frac{t_2}{2} = t$$

Allows the following substitution for the offset $\beta$

$$C = D = \beta * t$$

Which results in further simplification for a relationship for $\tau$

$$\tau = t * ln \frac{A - \beta * t}{B - A - \beta * t}$$

where:

   t .....length of integration window
   A ....integral of signal from to to $t_0+t$
   B ....integral of signal from to to $t_0 + 2t$

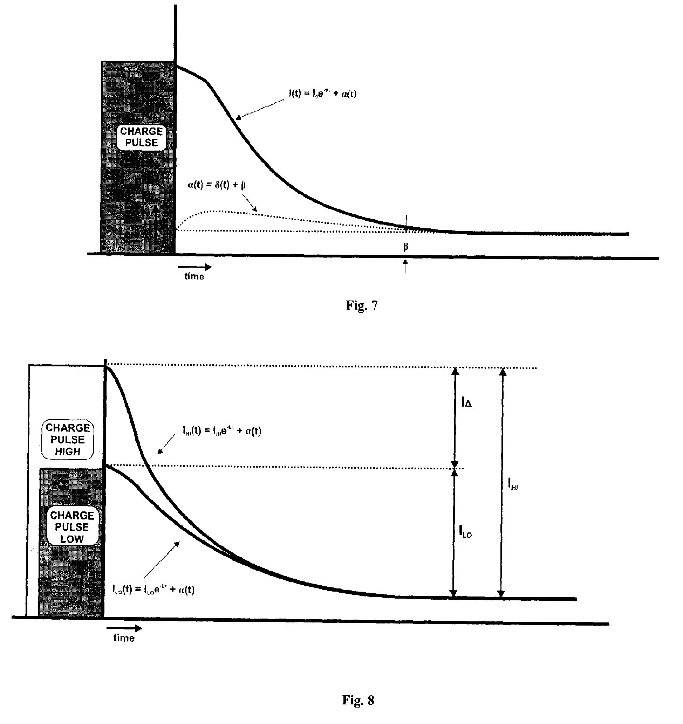

If the background signal is not a static offset similar to $\beta$ in Figure 6, then some variations may be provided to account for any fluctuation of the background signal. In one embodiment, the background signal may change slightly during the measurement period following the charge pulse, as is shown in Figure 7. In this example, the background signal $\alpha(t)$ has two components, a time dependant signal 8(t) and the offset $\beta$. Changes in these parameters will affect the decay time measurement of the sensor, and therefore affect the temperature measurement. There are many possible parameters that could cause fluctuations in the time dependant portion of the background signal, but there are two that warrant particular consideration. The first may be caused by heating of the LED itself during the charge pulse phase, and the second may be caused by changing sensitivity of the LED as its ambient temperature rises.

In one embodiment, the background signal $\alpha(t)$, as shown in Figure 7, may be compensated for by characterizing the background signal without the charge pulse signal and subsequently compensating for this background. This could be effective if the background signal would have only a time dependency. However, the background signal may also be dependent on the LED environmental temperature, which may also be characterized and compensated.

In one exemplary embodiment, the time and environmental background signal dependency can both be compensated for by taking advantage of the fact that the background signal is almost independent of driving current within a particular operational band of the LED used for excitation and detection. Therefore, the background signal may be removed by collecting time decay data resulting from charge pulses of two distinct amplitudes (a low and high driving current) and differencing them. The measurements in both cases will show almost identical background signals, which then get subtracted every measurement cycle, effectively removing their influence. By its nature, this algorithm is inherently immune not only to the time dependent background signal, but as well to any background signal long term ageing or drift.

A schematic graph of photon flux decay with a high amplitude pulse, and a low amplitude pulse is shown in Figure 8. In one embodiment, the value of $\tau$ can be derived by the subtraction of the two equations that describe the decay properties. More specifically, this allows the generation of another function $I_F(t)$ that will have the same time decay characteristics as $I_H(t)$ and $I_L(t)$ without the background effects.

$$I_F(t) = I_H(t) - I_L(t)$$

Giving,

$$I_F(t) = I_\Delta(t) * e^{\frac{-t}{\tau}} = I_{Hi}(t) * e^{\frac{-t}{\tau}} - I_{Lo}(t) * e^{\frac{-t}{\tau}}$$

And inserting into the previously developed relationship for $\tau$, can be summarized with

$$\tau = t * ln \frac{A_{Hi} - A_{Lo}}{(B_{Hi} - A_{Hi}) - (B_{Lo} - A_{Lo})}$$

where:

$A_{Hi}$ is the value for integral A during the high pulse

$A_{Lo}$ is the value for integral A during the low pulse

$B_{Hi}$ is the value for integral B during the high pulse

$B_{Lo}$ is the value for integral B during the low pulse

In one embodiment, the controller (16) may be configured to provide a strobed series of low amplitude pulses and high amplitude pulses, and the resulting signal information is then averaged for each, with the average values being used in a suitable algorithm. Alternatively, a median value, or some other statistically representative value may be used.

The algorithms described above may be implemented in software, firmware or hardware, or combinations thereof. The system components shown in the Figures or described above may be or may include a computer or multiple computers. The components may be described in the general context of computer-executable instructions, such as program modules, being executed by a computer. Generally, program modules include routines, programs, objects, components, data structures, etc., that perform particular tasks or implement particular abstract data types.

The processing unit that executes commands and instructions may utilize any of a wide variety of other technologies including a special purpose computer, a microcomputer, minicomputer, mainframe computer, programmed micro-processor, micro-controller, peripheral integrated circuit element, a CSIC (Customer Specific Integrated Circuit), ASIC (Application Specific Integrated Circuit), a logic circuit, a digital signal processor, a programmable logic device such as an FPGA (Field Programmable Gate Array), PLD (Programmable Logic Device), PLA (Programmable Logic Array), RFID processor, smart chip, or any other device or arrangement of devices that is capable of implementing the steps of the processes of the invention.

The computer system may include a general purpose computing device in the form of a computer including a processing unit, a system memory, and a system bus that couples various system components including the system memory to the processing unit. Although many internal components of the computer or microprocessor device are not shown, those of ordinary skill in the art will appreciate that such components and the interconnections are well known.

As will be apparent to those skilled in the art, various modifications, adaptations and variations of the foregoing specific disclosure can be made without departing from the scope of the invention claimed herein.

References

The following references are indicative of the level of skill of one skilled in the art.

[1] Fiber Optic Fluorescence Thermometry, K.T.V. Grattan, Z.Y.Zhang.

[2] Time- and frequency-domain analyses of fluorescence lifetime for temperature sensing. L. Rosso and V. C. Fernicola (Istituto Nazionale di Ricerca Metrologica (INRIM), Strada delle Cacce 73, 10135 Torino, Italy) Rev. Sci. Instrum. 77, 034901 (2006)

[3] Fluorescent decay thermometer with biological applications, R. R. Sholes, J, G. Small (Optical Sciences Center. University of Arizona. Tucson, Arizona 85721) Rev. Sci. Instrum., Vol. 51, No.7, July 1980.

[4] Passive (Self-Powered) Fiber-Optic Sensors. S.A. McElhaney et al., 1992 IEEE Nuclear Science Symposium, October 27-31, 1992.

[5] U.S. Pat. No. 4,448,547

[6] U.S. Pat. No. 4,652,143

[7] U.S. Pat. No 4,776,827

[8] U.S. Patent Application No. 20090157346 (Yamatake)

**Claims**

1. A system for determining a temperature in an environment, comprising:

   (a) a semi-conductor optical device which comprises one active component adapted to operate as both a (12) light-emitting device and a light detection device;

(b) a photo luminescent material (14) adapted to be disposed within the environment wherein the photo luminescent material (14) has an excitation band that overlaps a portion of the material's emission band which in turn both overlap a portion of the emission band of the semi-conductor optical component ;

(c) an optical fiber (20) disposed between the semi-conductor optical device (12) and the photo luminescent material (14) for transmitting incident light from the semi-conductor optical device configured as a photo-emitter to the photoluminescent material (14), and for transmitting photoluminescent light from the photoluminescent material to the same semi-conductor optical device (12) configured as photo-detector;

(d) a circuit (15) for driving the optical device (12) including a switch (15c); and

(e) a processor (16) operatively connected to the driving circuit and configured to execute a method comprising the steps of driving the optical device (12) to emit a pulse of incident light, thereby producing photoluminescent light from the photoluminescent material (14), receiving the photoluminescent light with the optical device (12), and creating signal information associated with a temperature-dependent characteristic of the photoluminescent light, and deriving temperature information from the signal information.

2. The system of claim 1 wherein the semi-conductor optical device (12) is a light emitting diode.

3. The system of claim 2 wherein the signal information comprises data related to time decay of the photoluminescent light and the step of deriving temperature information comprises the step of calculating a value representative of the rate of decay of the photoluminescent light, and equating the value to a temperature.

4. The system of claim 3wherein the step of deriving temperature information includes a step of determining a background signal.

5. The system of claim 4 wherein the processor (12) is configured to execute a method comprising the steps of driving the optical device(12) at a low amplitude and a high amplitude to emit a low amplitude pulse of incident light and a high amplitude pulse of incident light respectively, receiving data related to the time decay of the photo luminescent light from the optical device characteristic of photo luminescent light at both the low amplitude and the high amplitude, and deriving temperature information from a value representing the difference between the low amplitude signal information and the high amplitude signal information.

6. The system of claim 5 wherein optical device (12) is strobed with alternating series of low amplitude pulses and high amplitude pulses, and the resulting value representative of the rate of decay is the average or median value for each of a plurality of low amplitude pulses and high amplitude pulses.

7. A method of determining the temperature of an environment using a single semiconductor optical device (12) which comprises one active component optically connected to a photo luminescent material (14) disposed within the environment, wherein the photoluminescent material has an excitation band that overlaps a portion of the material's emission band which in turn both overlap a portion of the emission band of the semi-conductor optical component said method comprising the steps of:

(a) driving the optical device active component to emit a pulse of incident light, thereby producing photoluminescent light from the photoluminescent material;

(b) receiving the photoluminescent light with the optical device active component, and creating signal information associated with a temperature-dependent characteristic of the photoluminescent light; and

(c) deriving temperature information from the signal information.

8. The method of claim 7 wherein the signal information comprises data related to time decay of the photoluminescent light and the step of deriving temperature information comprises the step of calculating a value representative of the time decay of the photoluminescent light, and equating the value to a temperature.

9. The method of claim 8 wherein the step of driving the optical device (12) to emit a pulse of incident light comprises steps of driving the optical device at a low amplitude and a high amplitude to emit a low amplitude pulse of incident light and a high amplitude pulse of incident light respectively, and signal information is received from the optical device characteristic of photoluminescent light at both the low amplitude and the high amplitude, and temperature information is derived from a value representative of the difference between the low amplitude signal information and the high amplitude signal information.

10. The method of claim 9 wherein optical device (12) is strobed with alternating series of low amplitude pulses and high amplitude pulses, and the resulting signal information is the average or median value for each of a plurality of low amplitude pulses and high amplitude pulses.

**Patentansprüche**

1. System zum Bestimmen einer Temperatur einer Umgebung mit:

   (a) einer optischen Halbleitervorrichtung, die eine aktive Komponente umfasst, die dazu eingerichtet ist, sowohl als eine (12) lichtemittierende Vorrichtung als auch als eine Lichtdetektionsvorrichtung zu funktionieren,
   (b) einem photolumineszentes Material (14), das dazu eingerichtet ist, um innerhalb der Umgebung angeordnet zu sein, wobei das photolumineszentes Material (14) ein Anregungsband hat, das mit einem Bereich des Emissionsbandes des Materials überlappt, die wiederum beide mit einem Bereich des Emissionsbandes der optischen Halbleiterkomponente überlappen,
   (c) einer optischen Faser (20), die zwischen der optischen Halbleitervorrichtung (12) und dem photolumineszenten Material (14) angeordnet ist, um von der als Photoemitter fungierenden optischen Halbleitervorrichtung einfallendes Licht zu dem photolumineszenten Material zu übertragen (14) und um Photolumineszenzlicht von dem photolumineszenten Material zu derselben, als Photodetektor fungierenden optischen Halbleitervorrichtung (12) zu übertragen, und
   (d) einer Schaltung (15) zum Betreiben der optischen Vorrichtung (12) einschließlich eines Schalters (15c), und
   (e) einem Prozessor (16), der betriebsmäßig mit der Betreiberschaltung verbunden ist und dazu eingerichtet ist, ein Verfahren auszuführen, das die Schritte aufweist: Betreiben der optischen Vorrichtung (12), um einen Impuls von einfallendem Licht zu emittieren, wodurch von dem photolumineszenten Material (14) Photolumineszenzlicht erzeugt wird, Empfangen des Photolumineszenzlichts mit der optischen Vorrichtung (12) und Erzeugen von Signalinformation, die mit einer temperaturabhängigen Charakteristik des Photolumineszenzlichts zusammenhängt, und Ableiten von Temperaturinformation aus der Signalinformation.

2. System nach Anspruch 1, wobei die optische Halbleitervorrichtung (12) eine Leuchtdiode ist.

3. System nach Anspruch 2, wobei die Signalinformation Daten beinhaltet, die im Zusammenhang mit der Abklingzeit des Photolumineszenzlichts stehen, und der Schritt des Ableitens der Temperaturinformation den Schritt beinhaltet, einen Wert zu berechnen, der repräsentativ für die Abklinggeschwindigkeit des Photolumineszenzlichts ist, und den Wert mit einer Temperatur gleichzusetzen.

4. System nach Anspruch 3, wobei der Schritt des Ableitens der Temperaturinformation einen Schritt der Bestimmung eines Hintergrundsignals beinhaltet.

5. System nach Anspruch 4, wobei der Prozessor (12) dazu eingerichtet ist, ein Verfahren auszuführen, das die Schritte aufweist: Betreiben der optischen Vorrichtung (12) bei einer niedrigen Amplitude und einer hohen Amplitude, um einen Impuls von einfallendem Licht mit niedriger Amplitude und einen Impuls von einfallenden Licht mit hoher Amplitude zu emittieren, Empfangen von Daten durch die optische Vorrichtung, die in Beziehung zu der Abklingzeit des Photolumineszenzlichts in Beziehung stehen, und die charakteristisch für Photolumineszenzlicht sowohl bei der niedrigen Amplitude als auch bei der hohen Amplitude sind, und Ableiten von Temperaturinformation aus einem Wert, der die Differenz zwischen Signalinformation bei niedriger Amplitude und Signalinformation bei hoher Amplitude repräsentiert.

6. System nach Anspruch 5, wobei die optische Vorrichtung (12) getaktet mit abwechselnden Folgen von Impulsen niedriger Amplitude und Impulsen hoher Amplitude betrieben wird und der resultierende, für die Abklingzeit repräsentative Wert der Mittelwert oder Medianwert für jeder aus einer Mehrzahl von Impulsen niedriger Amplitude und Impulsen hoher Amplitude ist.

7. Verfahren zum Bestimmen der Temperatur einer Umgebung unter Verwendung einer einzelnen optischen Halbleitervorrichtung (12), die eine aktive Komponente aufweist, die optisch mit einem photolumineszenten Material (14) verbunden ist, das in der Umgebung angeordnet ist, wobei das photolumineszente Material ein Anregungsband hat, das mit einem Bereich des Emissionsbandes des Materials überlappt, die wiederum beide mit einem Bereich des Emissionsbandes der optischen Halbleiterkomponente überlappen, wobei das Verfahren die Schritte aufweist:

   (a) Betreiben der aktiven Komponente der optischen Vorrichtung, um Impulse von einfallendem Licht zu emittieren, wodurch Photolumineszenzlicht von dem photolumineszenten Material erzeugt wird,

(b) Empfangen des Photolumineszenzlichts mit der aktiven Komponente der optischen Vorrichtung und Erzeugen von Signalinformation, die im Zusammenhang mit einer temperaturabhängigen Charakteristik des Photolumineszenzlichts steht und

(c) Ableiten von Temperaturinformation aus der Signalinformation.

8. Verfahren nach Anspruch 7, wobei die Signalinformation Daten beinhaltet, die in Beziehung zur Abklingzeit des Photolumineszenzlichts stehen, und der Schritt des Ableitens der Temperaturinformation die Schritte aufweist, einen Wert zu berechnen, der repräsentativ für die Abklingzeit des Photolumineszenzlichts ist, und den Wert einer Temperatur gleichzusetzen.

9. Verfahren nach Anspruch 8, wobei der Schritt des Betreibens der optischen Vorrichtung (12) zur Emission eines Impulses von einfallendem Licht die Schritte aufweist, die optische Vorrichtung bei einer niedrigen Amplitude und einer hohen Amplitude zu betreiben, um jeweils Impulse einfallenden Lichts mit niedriger Amplitude und Impulse einfallenden Lichts mit hoher Amplitude emittieren, und wobei Signalinformation von der optischen Vorrichtung empfangen wird, die charakteristisch für Photolumineszenzlicht sowohl bei der niedrigen Amplitude als auch bei der hohen Amplitude ist, und Temperaturinformation aus einem Wert abgeleitet wird, der repräsentativ ist für die Differenz zwischen der Signalinformation niedriger Amplitude und der Signalinformation hoher Amplitude.

10. Verfahren nach Anspruch 9, wobei die optische Vorrichtung (12) getaktet mit abwechselnden Folgen von Impulsen niedriger Amplitude und Impulsen hoher Amplitude betrieben wird und wobei die resultierende Signalinformation der Mittelwert oder der Medianwert für jede aus einer Vielzahl von Impulsen niedriger Amplitude und Impulsen hoher Amplitude ist.

## Revendications

1. Système de détermination de la température d'une ambiance, comprenant:

a) un dispositif (12) optique à semiconducteur, qui comprend un composant actif propre à fonctionner à la fois comme dispositif d'émission de lumière et comme dispositif de détection de lumière;

b) une substance (14) photoluminescente propre à être mise dans l'ambiance, la substance (14) photoluminescente ayant une bande d'excitation qui chevauche une partie de la bande d'émission de la substance, qui chevauchent à leur tour toutes deux une partie de la bande d'émission du composant optique à semiconducteur;

c) une fibre (20) optique disposée entre le dispositif (12) optique à semiconducteur et la substance (14) photoluminescente pour transmettre de la lumière incidente du dispositif optique à semiconducteur configuré en photoémetteur à la substance (14) photoluminescente et pour transmettre de la lumière photoluminescente, de la substance photoluminescente au même dispositif (12) optique à semiconducteur configuré en photodétecteur;

d) un circuit (15) de commande du dispositif (12) optique comprenant un commutateur (15c); et

e) un processeur (16) connecté fonctionnellement au circuit de commande et configuré pour exécuter un procédé comprenant les stades de commande du dispositif (12) optique pour qu'il émette une impulsion de lumière incidente en produisant ainsi de la lumière photoluminescente à partir de la substance (14) photoluminescente, de réception de la lumière photoluminescente par le dispositif (12) optique et de création d'une information de signal associée à une caractéristique qui dépend de la température de la lumière photoluminescente et de déduction d'une information de température à partir de l'information de signal.

2. Système suivant la revendication 1, dans lequel le dispositif (12) optique à semiconducteur est une diode photoluminescente.

3. Système suivant la revendication 2, dans lequel l'information de signal comprend une donnée se rapportant à la décroissance en fonction du temps de la lumière photoluminescente, et le stade de détection d'une information de température comprend le stade de calcul d'une valeur représentant la vitesse de décroissance de la lumière photoluminescente et de mise en correspondance de la valeur à une température.

4. Système suivant la revendication 3, dans lequel le stade de déduction de l'information de température comprend un stade de détermination d'un signal de fond.

**5.** Système suivant la revendication 4, dans lequel le processeur (16) est configuré pour exécuter un procédé comprenant les stades de commande du dispositif (12) optique à une amplitude petite et à une amplitude grande, pour émettre une impulsion de petite amplitude de lumière incidente et une impulsion de grande amplitude de lumière incidente respectivement, de réception de données se rapportant à la décroissance en fonction du temps, de la lumière photoluminescente provenant de la caractéristique du dispositif optique de lumière photoluminescente à la fois à l'amplitude petite et à l'amplitude grande et de déduction d'une information de température d'une valeur représentant la différence entre l'information de signal de petite amplitude et l'information de signal de grande amplitude.

**6.** Système suivant la revendication 5, dans lequel le dispositif (12) optique est échantillonné par des séries alternées d'impulsions de petite amplitude et d'impulsions de grande amplitude et la valeur résultante, représentative de la vitesse de décroissance, est la valeur moyenne ou médiane de chacune d'une pluralité d'impulsions de petite amplitude et d'impulsions de grande amplitude.

**7.** Procédé de détermination de la température d'une ambiance en utilisant un dispositif (12) optique à semiconducteur unique, qui comprend un seul composant actif, relié optiquement à une substance (14) photoluminescente disposée dans l'ambiance, dans lequel la substance photoluminescente a une bande d'excitation qui chevauche une partie de la bande d'émission de la substance qui, toutes deux, chevauchent à leur tour une partie de la bande d'émission du composant optique à semiconducteur;
le procédé comprenant les stades de:

a) commande du composant actif du dispositif optique actif pour qu'il émette une impulsion de lumière incidente en produisant ainsi de la lumière photoluminescente à partir de la substance photoluminescente;
b)réception de la lumière photoluminescente par le composant actif du dispositif optique et création d'une information de signal associée à une caractéristique en fonction de la température de la lumière photoluminescente; et
c)déduction d'une information de température de l'information de signal.

**8.** Procédé suivant la revendication 7, dans lequel l'information de signal comprend une donnée se rapportant à la décroissance dans le temps de la lumière photoluminescente et le stade de déduction de l'information de température comprend le stade de calcul d'une valeur représentative de la décroissance en fonction du temps de la lumière photoluminescente et de mise de la valeur en correspondance avec une température.

**9.** Procédé suivant la revendication 8, dans lequel le stade de commande du dispositif (12) optique pour qu'il émette une impulsion de lumière incidente comprend les stades de commande du dispositif actif à une amplitude petite et une amplitude grande pour qu'il émette une impulsion de petite amplitude de lumière incidente et une impulsion de grande amplitude de lumière incidente respectivement, et l'information de signal est reçue à partir de la caractéristique du dispositif optique de lumière photoluminescente à la fois à la petite amplitude et à la grande amplitude, et l'information de température est déduite d'une valeur représentative de la différence entre l'information de signal de petite amplitude et de l'information de signal de grande amplitude.

**10.** Procédé suivant la revendication 9, dans lequel le dispositif (12) optique est échantillonné par des séries alternées d'impulsions de petite amplitude et l'information de signal résultante est la valeur moyenne ou médiane pour chacune d'une pluralité de valeurs de petite amplitude et de valeurs de grande amplitude.

Fig.1

Fig. 2A

Fig 2B

Fig. 3

Fig. 4A

Fig. 4B

Fig. 4C

Fig. 4D

Fig. 5

$$I(t) = I_0 e^{-t/\tau} + \beta$$

CHARGE PULSE

Fig. 6

$$I(t) = I_o e^{-t/\tau} + \alpha(t)$$

$$\alpha(t) = \delta(t) + \beta$$

β

Fig. 7

$$I_{Hi}(t) = I_{Hi} e^{-t/\tau} + \alpha(t)$$

$$I_{Lo}(t) = I_{Lo} e^{-t/\tau} + \alpha(t)$$

Fig. 8

15

## REFERENCES CITED IN THE DESCRIPTION

**Patent documents cited in the description**

- US 4448547 A
- US 4652143 A
- US 5470155 A
- US 7329998 B
- WO 2008152922 A
- US 4776827 A
- US 20090157346 A, Yamatake

**Non-patent literature cited in the description**

- **L. ROSSO ; V. C. FERNICOLA.** Rev. Sci. Instrum. Istituto Nazionale di Ricerca Metrologica (INRIM), 2006, vol. 77, 034901
- Fluorescent decay thermometer with biological applications. **R. R. SHOLES ; J, G. SMALL.** Rev. Sci. Instrum. Optical Sciences Center, July 1980, vol. 51
- **S.A. MCELHANEY et al.** Passive (Self-Powered) Fiber-Optic Sensors. *IEEE Nuclear Science Symposium,* 27 October 1992